# EUROPÄISCHE PATENTSCHRIFT

(11) **EP 2 379 383 B1**
(45) Veröffentlichungstag und Bekanntmachung des Hinweises auf die Patenterteilung: **04.10.2017**
(21) Anmeldenummer: 09768057.3
(22) Anmeldetag: 09.12.2009
(51) Int. Cl.: B60T 8/48, B60T 13/74

(54) **VERFAHREN ZUR STEUERUNG EINER HYDRAULISCHEN FAHRZEUGBREMSANLAGE**
METHOD FOR CONTROLLING A HYDRAULIC VEHICLE BRAKE SYSTEM
PROCÉDÉ DE COMMANDE D'UNE INSTALLATION HYDRAULIQUE DE FREINAGE D'UN VÉHICULE

(30) Priorität: 18.12.2008 DE 102008054856
(43) Veröffentlichungstag der Anmeldung: 26.10.2011
(73) Patentinhaber: Robert Bosch GmbH, 70442 Stuttgart (DE)
(72) Erfinder: VOLLERT, Herbert, 71665 Vaihingen/Enz (DE); WEIBERLE, Reinhard, 71665 Vaihingen/Enz (DE); KNEIP, Frank, 74360 Ilsfeld (DE)
(86) Internationale Anmeldenummer: PCT/EP2009/066695
(87) Internationale Veröffentlichungsnummer: WO 2010/069832

(56) Entgegenhaltungen:
- EP-A- 0 819 591
- WO-A-96/02409
- WO-A-98/43857
- WO-A-99/17971
- WO-A-2009/083216
- DE-A1- 4 445 975
- DE-A1- 10 057 557

## Beschreibung

### Stand der Technik

Die Erfindung betrifft ein Verfahren zur Steuerung einer hydraulischen, einen Bremskraftverstärker aufweisenden Fahrzeugbremsanlage mit den Merkmalen des Oberbegriffs des Anspruchs 1. Unter "Steuern" im Sinne der Erfindung ist auch ein Regeln zu verstehen.

Hydraulische Fahrzeugbremsanlagen sind an sich bekannt. Sie weisen einen Hauptbremszylinder auf, an den ein oder mehrere Radbremszylinder von Radbremsen angeschlossen sind, wobei hier verkürzend auch einfach nur von Radbremsen die Rede sein wird. Die Betätigung erfolgt per Fuß mittels eines Bremspedals oder von Hand mit einem Bremshebel. Üblicherweise weist der Hauptbremszylinder einen Unterdruck-Bremskraftverstärker auf.

Bekannt sind auch hydraulische Fahrzeugbremsanlagen mit einer Radschlupfregelung, beispielsweise einer (Brems-) Blockierschutzregelung, einer Antriebsschlupfregelung und/oder einer Fahrdynamikregelung. Für diese Regelungen sind die Abkürzungen ABS, ASR, FDR und ESP gebräuchlich. Zur Regelung weisen die Fahrzeugbremsanlagen Radbremsdruckmodulationsventilanordnungen sowie eine Hydropumpe je Bremskreis auf, mit denen die Radbremsdrücke radindividuell, bei einfacheren Systemen auch zum Teil auch achsweise regelbar/modulierbar sind. Die Hydropumpe einer Radschlupfregelung wird vielfach als Rückförderpumpe bezeichnet. Bei solchen Fahrzeugbremsanlagen ist es möglich und bekannt, mit der Hydropumpe Bremsflüssigkeit vor einer Bremsbetätigung in die Radbremsen zu fördern, um ein Lüftspiel in den Radbremsen zu verkleinern, vorzugsweise Reibbremsbeläge der Radbremsen an eine Bremsscheibe, eine Bremstrommel oder einen sonstigen zu bremsenden Bremskörper anzulegen. Das Lüftspiel ist ein Spalt zwischen den Reibbremsbelägen und dem Bremskörper bei nicht betätigter Bremse. Die Reibbremsbeläge können kraftfrei an den Bremskörper angelegt werden oder mit geringer Spannkraft angedrückt werden. Bei einer nachfolgenden Bremsbetätigung muss das Lüftspiel nicht überwunden werden, ein Leerweg bei der Bremsbetätigung verkürzt sich, die Bremsbetätigung erfolgt schneller. Ein weiterer Vorteil ist, dass ein größerer Betätigungsweg für die Bremsbetätigung zur Verfügung steht.

Die Verkleinerung des Lüftspiels erfolgt auf einen möglichen Bremswunsch eines Fahrzeugführers hin. Als solcher Bremswunsch wird typischerweise ein schnelles Lösen eines Gaspedals oder eines Gasgriffs eines Kraftfahrzeugs angesehen. "Schnell" bedeutet in diesem Fall ein schnelleres, insbesondere ein erhebliches schnelleres Lösen des Gaspedals oder Gasgriffs als üblich, wobei die übliche Lösegeschwindigkeit des Gaspedals oder Gasgriffs fahrerindividuell sein, nämlich während des Fahrbetriebs gemessen werden kann. Bei einem schnellen Lösen des Gaspedals oder des Gasgriffs ist mit einer anschließenden Bremsbetätigung, oft auch starken Bremsbetätigung zu rechnen. Die Verkleinerung des Lüftspiels kann auch bei jedem Lösen des Gaspedals oder Gasgriffs unabhängig von der Geschwindigkeit des Lösens erfolgen. Ein möglicher Bremswunsch kann auch von einem Abstandsradar ermittelt werden, das zum Einhalten eines geschwindigkeitsabhängigen Mindestabstands von einem vorausfahrenden Fahrzeug bekannt ist. Nähert sich das Fahrzeug mit erheblicher höherer Geschwindigkeit einem vorausfahrenden Fahrzeug oder fährt es auf ein Hindernis zu, kann das Lüftspiel in den Radbremsen durch Fördern von Bremsflüssigkeit mit der Hydropumpe verringert werden um die Zeit der Bremsbetätigung zu verkürzen.

Die internationale Patentanmeldung WO 96/02 409 A offenbart eine hydraulische Fahrzeugbremsanlage mit einer Radschlupfregeleinrichtung mit einem hilfskraftbetätigbaren Hauptbremszylinder, der einen steuerbaren Unterdruck-Bremskraftverstärker aufweist. "Steuerbar" bedeutet, dass die Arbeitskammer des Bremskraftverstärkers mittels eines Magnetventils belüftbar ist, so dass unabhängig von einer Muskelkraftbetätigung eine Betätigungskraft auf den Hauptbremszylinder ausübbar ist. Die Steuerung (des Magnetventils) des Bremskraftverstärkers erfolgt mit einem elektronischen Steuergerät, welches u. a. auch die Schlupfregelung der Fahrzeugbremsanlage ausführt. Die genannte Anmeldung sieht vor, dass auf einen möglichen Bremswunsch eines Fahrzeugführers der Bremskraftverstärker so gesteuert wird, dass er den Hauptbremszylinder so betätigt, dass Radbremsen der Fahrzeugbremsanlage vorbefüllt, d. h. Reibbremsbeläge der Radbremsen an Bremsscheiben angelegt werden. Das Lüftspiel wird also durch Betätigung des Hauptbremszylinders mit dem steuerbaren Unterdruck-Bremskraftverstärker eliminiert.

Vergleichbare Verfahren offenbaren die internationalen Patentanmeldungen WO 98/43 857 A, WO 99/17 971 A und die europäische Patentanmeldung EP 0 819 591 A1.

Zusätzlich zum Eliminieren des Lüftspiels offenbart die oben genannte internationale Patentanmeldung WO 96/02 409 A, zu einer Fremdkraftbremsung die Trennventile zu schließen und die Radbremsen mit einem Hydraulikdruck zu betätigen, den eine Rückförderpumpe der hydraulischen Fahrzeugbremsanlage erzeugt, nachdem das Lüftspiel durch Betätigung des Hauptbremszylinders mit dem steuerbaren Bremskraftverstärker eliminiert worden ist. Durch Schließen der Trennventile wird die Fahrzeugbremsanlage hydraulisch vom Hauptbremszylinder getrennt.

### Offenbarung der Erfindung

Die Erfindung sieht ein Verfahren zur Steuerung einer einen steuerbaren Bremskraftverstärker aufweisenden Fahrzeugbremsanalage zur Verkleinerung eines Lüftspiels einer Radbremse vor. Dabei ist unter steuerbar eine von einer Muskelkraftbetätigung unabhängige Steuer- oder Regelbarkeit meint, um den Bremskraftverstärker zu betätigen. Insbesondere ist der Bremskraftverstärker elektrisch oder elektronisch steuerbar.
Die Fahrzeugbremsanlage weist ein Ventil, mit dem die Radbremse hydraulisch von einem Hauptbremszylinder der Fahrzeugbremsanlage trennbar ist, und eine Hydropumpe, an die die Radbremse angeschlossen ist.
Erfindungsgemäß wird auf einen möglichen Bremswunsch hin der Bremskraftverstärker betätigt und das Ventil geschlossen, so dass das Lüftspiel in den Radbremsen der Fahrzeugbremsanlage verkleinert wird, insbesondere auf "Null" verkleinert wird.
Der mögliche Bremswunsch ist dabei ein Fahrzeugführer-Bremswunsch oder ein Bremswunsch, der auf einen Abstand zu einem vorausfahrenden Fahrzeug oder zu einem Hindernis, oder auch auf die Änderung des Abstands als Kriterium zurückgeht. Erfindungsgemäß wird nach dem Schließen des Ventils der Bremskraftverstärker in seine Ausgangsstellung rückgestellt, wobei die Hydropumpe nicht benutzt wird, um das Lüftspiel der Radbremsen zur Vorbereitung einer Bremsbetätigung zu verkleinern.

Auch ist eine gewisse Vorspannung der Fahrzeugbremsanlage, also ein Andrücken der Reibbremsbeläge der Radbremsen an deren Bremsscheiben, Bremstrommeln oder sonstige Bremskörper mit geringer Spannkraft, also eine leichte Bremsbetätigung möglich. Die Erfindung verkürzt den Betätigungsweg bei einer Bremsbetätigung, insbesondere wird ein Leerweg verkürzt, bis die Fahrzeugbremsanlage "anspricht", d.h. bremst. Der Leerweg kann auf "Null" verkürzt werden; wie bereits gesagt kann sogar die Fahrzeugbremsanlage "vorgespannt" werden, d.h. eine niedrige Bremskraft aufgebaut werden.

Die Fahrzeugbremsanlage zur Durchführung des erfindungsgemäßen Verfahrens weist ein Ventil auf, mit dem mindestens eine Radbremse hydraulisch von einem Hauptbremszylinder der Fahrzeugbremsanlage trennbar ist. Fahrzeugbremsanlagen mit Radschlupfregelung weisen solche Ventile auf, nämlich üblicherweise ein Trennventil je Bremskreis, mit dem der Bremskreis an den Hauptbremszylinder angeschlossen ist und ein Bremsdruckaufbauventil je Radbremse, bei einfachen Radschlupfregelsystemen auch ein Bremsdruckaufbauventil für die Radbremsen einer Fahrzeugachse.Die Erfindung sieht vor, dass auf den möglichen Bremswunsch hin das Ventil geschlossen und der Bremskraftverstärker wie beschrieben betätigt wird, so dass das Lüftspiel der Radbremsen verkleinert wird. Weist das Ventil einen Bypass auf, kann es vor, während oder nach der Betätigung des Bremskraftverstärkers geschlossen werden. Einen solchen Bypass, nämlich ein aus Richtung des Hauptbremszylinders in Richtung der Radbremsen durchströmbares Rückschlagventil, weist üblicherweise das Trennventil auf. Ohne Bypass kann das Ventil erst geschlossen werden, nachdem der Bremskraftverstärker betätigt und das Lüftspiel der Radbremsen verkleinert worden ist. Anschließend wird der Bremskraftverstärker wieder in seine Ausgangsstellung rückgestellt. Vorteil dieser Ausgestaltung des erfindungsgemäßen Verfahrens ist, dass der Bremskraftverstärker bei Beginn einer Bremsbetätigung seine Ausgangsstellung inne hat, so dass der gesamte Betätigungsweg des Bremskraftverstärkers zur Verfügung steht.

Sofern das Ventil einen Bypass aufweist, muss es bei einer Bremsbetätigung nicht geöffnet werden. Anspruch 2 sieht allerdings das Öffnen des Ventils bei einer Bremsbetätigung vor, wobei das Ventil vorzugsweise erst dann geöffnet wird, wenn im Hauptbremszylinder der Druck in etwa so groß oder sogar größer als in den

Ein erheblicher Vorteil der Erfindung ist, dass die Rückförderpumpe, also die Hydropumpe einer Radschlupfregelung nicht benutzt wird um das Lüftspiel der Radbremsen zur Vorbereitung einer Bremsbetätigung zu verkleinern. Hydropumpen von Radschlupfregelungen sind in ihrer Lebensdauer nicht für eine Benutzung bei jeder Bremsbetätigung ausgelegt, sondern nur für seltene Bremsbetätigungen, weil eine Radschlupfregelung im Alltagsverkehr selten vorkommt. Die Verkleinerung des Lüftspiels mit der Hydropumpe einer Radschlupfregelung erfordert deswegen eine Ausrüstung der Fahrzeugbremsanlage mit Hydropumpen, die eine ein mehrfaches längere Lebensdauer aufweisen. Bremskraftverstärker werden dagegen bei jeder Bremsbetätigung benutzt und sind deswegen von vornherein für eine entsprechende Lebensdauer bzw. Anzahl an Betätigungen ausgelegt.

Die Unteransprüche haben vorteilhafte Ausgestaltungen und Weiterbildungen der Erfindung zum Gegenstand.

Als möglichen Bremswunsch kann wie bereits ausgeführt ein Lösen oder ein schnelles Lösen eines Gaspedals oder eines Gasgriffs eines mit der Fahrzeugbremsanlage ausgerüsteten Kraftfahrzeugs angesehen werden. Der Abstand zu einem vorausfahrenden Fahrzeug oder zu einem Hindernis insbesondere in Abhängigkeit von der Fahrgeschwindigkeit ist ein anderes Kriterium eines möglichen Bremswunsches, wobei auch die Änderung des Abstands, also die Geschwindigkeit der Annäherung an das vorausfahrende Fahrzeug oder das Hindernis das Kriterium für den möglichen Bremswunsch bilden kann. Anspruch 3 sieht eine Sensorik vor, die eine Annäherung eines Fahrerfußes an ein Bremspedal erkennt. Die Annäherung des Fahrerfuß an das Bremspedal wird als möglicher Bremswunsch angesehen, der die Betätigung des Bremskraftverstärkers zur Verkleinerung des Lüftspiels der Radbremsen auslöst. Möglich ist ein optischer Sensor, beispielsweise mit einer Lichtschranke, ein Ultraschallsensor, ein kapazitiver Sensor. Die Aufzählung ist nicht abschließend, jede Sensorik, mit der die Annäherung des Fahrerfuß an das Bremspedal erkennbar ist, kommt für die Verwendung in der Erfindung in Betracht.

Das erfindungsgemäße Verfahren kann auch zu einer Lüftspieleinstellung und/oder einer Bremspedalwegeinstellung angewandt werden. Dies ist Gegenstand des Anspruchs 5. Ersteres bedeutet, dass das Lüftspiel der Radbremsen unabhängig von einem möglichen Bremswunsch verkleinert wird. Die Lüftspieleinstellung kann radindividuell erfolgen, wenn eine Radschlupfregelung vorhanden ist. Ein konstruktives Lüftspiel der Radbremsen lässt sich dadurch, auch radindividuell, verkleinern.

Die Anwendung des erfindungsgemäßen Verfahrens ist grundsätzlich mit jedem steuerbaren Bremskraftverstärker möglich. Ein Unterdruck-Bremskraftverstärker

weist dazu beispielsweise ein steuerbares Ventil zur Belüftung einer Arbeitskammer auf zusätzlich zu einem vorhanden Servoventil, das die Arbeitskammer in Abhängigkeit vom Weg einer Kolbenstange und/oder einer auf sie ausgeübten Muskelkraft belüftet. Anspruch 6 sieht einen elektromechanischen Bremskraftverstärker vor, der konstruktionsbedingt elektrisch- bzw. elektronisch steuerbar ist. Elektromechanische Bremskraftverstärker sind bekannt, beispielhaft wird auf die Offenlegungsschrift DE 100 57 557 A1 hingewiesen.

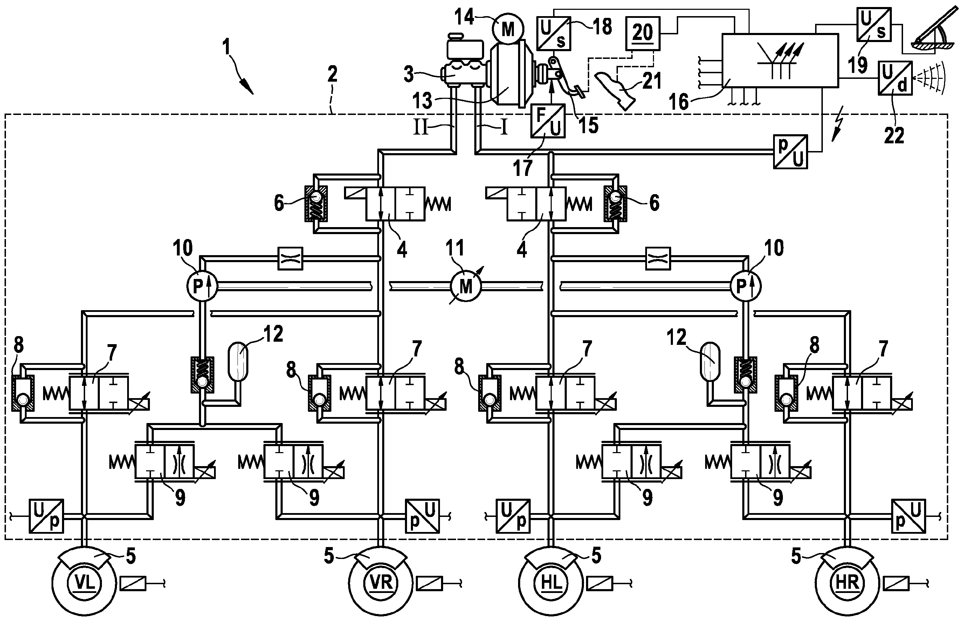

### Kurze Beschreibung der Zeichnung

Die Erfindung wird nachfolgend anhand der Zeichnung näher erläutert. Die einzige Figur zeigt einen Schaltplan einer hydraulischen Fahrzeugbremsanlage zur Erläuterung des erfindungsgemäßen Verfahrens.

### Ausführungsform der Erfindung

Die in der Zeichnung dargestellte hydraulische Fahrzeugbremsanlage 1 zur Durchführung des erfindungsgemäßen Verfahrens weist eine Radschlupfregelung 2 (Blockierschutzregelung ABS; Antriebsschlupfregelung ASR; Fahrdynamikregelung FDR, ESP) auf. Sie ist als Zweikreisbremsanlage mit zwei Bremskreisen I, II ausgebildet, die an einen Hauptbremszylinder 3 angeschlossen sind. Jeder Bremskreis I, II ist über ein Trennventil 4 an den Hauptbremszylinder 3 angeschlossen. Die Trennventile 4 sind in ihrer stromlosen Grundstellung offene 2/2-Wege-Magnetventile. Den Trennventilen 4 ist jeweils ein vom Hauptbremszylinder 3 zu Radbremsen 5 durchströmbares Rückschlagventil 6 hydraulisch parallel geschaltet. An das Trennventil 4 jedes Bremskreis I, II sind die Radbremsen 5 über Bremsdruckaufbauventile 7 angeschlossen. Die Bremsdruckaufbauventile 7 sind in ihrer stromlosen Grundstellung offene 2/2-Wege-Magnetventile. Ihnen sind Rückschlagventile 8 parallel geschaltet, die von den Radbremsen 5 in Richtung zum Hauptbremszylinder 3 durchströmbar sind.

An jede Radbremse 5 ist ein Bremsdruckabsenkventil 9 angeschlossen, die gemeinsam an eine Saugseite einer Hydropumpe 10 angeschlossen sind, die auch als Rückförderpumpe bezeichnet wird. Die Bremsdruckabsenkventile 9 sind als in ihrer stromlosen Grundstellung geschlossene 2/2-Wege-Magnetventile ausgebildet. Eine Druckseite der Hydropumpe 10 ist zwischen den Bremsdruckaufbauventilen 7 und den Trennventilen 4 angeschlossen, d. h. die Druckseite der Hydropumpe 10 ist über die Bremsdruckaufbauventile 7 mit den Radbremsen 5 und über das Trennventil 4 mit dem Hauptbremszylinder 3 verbunden. Die Bremsdruckaufbauventile 7 und die Bremsdruckabsenkventile 9 sind wegen der besseren Steuer- und Regelbarkeit Proportionalventile.

Jeder der beiden Bremskreise I, II weist eine Hydropumpe 10 auf, die gemeinsam mit einem Elektromotor 11 antreibbar sind. Die Saugseiten der Hydropumpen 10 sind an die Bremsdruckabsenkventile 9 angeschlossen. Auf der Saugseite der Hydropumpen 10 sind Hydrospeicher 12 zur Aufnahme und Zwischenspeicherung von Bremsflüssigkeit vorhanden, die durch Öffnen der Bremsdruckabsenkventile 9 während einer Schlupfregelung aus den Radbremsen 5 ausströmt.

Die Bremsdruckaufbauventile 7 und die Bremsdruckabsenkventile 9 bilden Radbremsdruckmodulationsventilanordnungen, mit denen bei angetriebener Hydropumpe 10 eine radindividuelle Bremsdruckregelung zur Schlupfregelung in an sich bekannter und hier nicht zu erläuternder Weise möglich ist. Die Trennventile 4 werden bei einer Schlupfregelung geschlossen, d.h. die Fahrzeugbremsanlage 1 wird hydraulisch vom Hauptbremszylinder 3 getrennt.

Der Hauptbremszylinder 3 weist einen Bremskraftverstärker 13 auf, im Ausführungsbeispiel einen elektromechanischen Bremskraftverstärker 13, der mit Hilfe eines Elektromotors 14 eine Hilfskraft erzeugt, die zusammen mit einer Muskelkraft, die über ein Bremspedal 15 aufgebracht wird, den Hauptbremszylinder 3 betätigt. Der symbolisch dargestellte Elektromotor 14 ist in den Bremskraftverstärker 13 integriert. Der Elektromotor 14 kann ein rotatorischer Motor sein, dessen Drehbewegung über ein Getriebe untersetzt und in eine translatorische Bewegung zur Betätigung des Hauptbremszylinders 3 gewandelt wird. Es ist auch eine Ausführung des Bremskraftverstärkers 13 mit einem Elektro-Linearmotor oder einem Elektromagneten möglich. Die Aufzählung ist nicht abschließend. Auch ist ein elektromechanischer Bremskraftverstärker 13 nicht zwingend für die Erfindung, auch andere, mit einem elektronischen Steuergerät 16 steuerbare Bremskraftverstärker sind möglich.

Zur Steuerung oder Regelung der Fahrzeugbremsanlage 1 einschließlich des Bremskraftverstärkers 13 ist das schon genannte elektronische Steuergerät 16 vorhanden. Mit einem Kraftsensor 17 ist eine auf das Bremspedal 15 ausgeübte Muskel- bzw. Pedalkraft und mit einem Wegsensor 18 eine Stellung und auch eine Geschwindigkeit oder Beschleunigung des Bremspedals 15 messbar. Mit einem Gaspedalsensor 19 ist die Stellung eines Gaspedals bzw. dessen Betätigungs- und insbesondere Lösegeschwindigkeit messbar. Des weiteren ist ein Fußsensor 20 vorgesehen, mit dem ein Fuß 21 eines Fahrzeugführers bzw. dessen Bewegung in Richtung des Bremspedals 15 messbar ist. Der Fuß 21 ist symbolisch durch einen Schuh dargestellt. Für den Fußsensor 20 kommen beispielsweise ein optischer Sensor bzw. eine Lichtschranke, ein Ultraschallsensor oder ein kapazitiver Sensor in Frage. Die Aufzählung ist nicht abschließend, es ist jeder Sensor bzw. Sensorik möglich, mit dem die Annäherung eines Objekts, im vorliegenden Fall des Fußes 21 eines Fahrzeugführers an das Bremspedal 15 erkennbar ist. Des weiteren ist ein Abstandssensor 22 vorhanden, mit dem der Abstand eines Fahrzeugs, das mit der Fahrzeugbremsanlage 1 ausgerüstet ist, von einem vorausfahrenden Fahrzeug oder von einem Hindernis messbar ist. Solche Abstandssensoren 22 werden zu einer geschwindigkeitsabhängigen Abstandsregelung eingesetzt. Der Fußsensor 20 und der Abstandssensor 22 sind für spezielle Ausführungsformen bzw. Weiterbildungen des erfindungsgemäßen Verfahrens vorgesehen.

Beim erfindungsgemäßen Verfahren wird der Bremskraftverstärker 13 bei (noch) nicht betätigter Fahrzeugbremsanlage 1 auf einen möglichen Bremswunsch eines Fahrzeugführers hin angesteuert. D.h. der Bremskraftverstärker 13 wird ohne Bremsbetätigung, sondern in Erwartung einer bevorstehenden Bremsbetätigung, betätigt und betätigt seinerseits den Hauptbremszylinder 3. Der Hauptbremszylinder 3 wird so betätigt, dass ein Lüftspiel in den Radbremsen 5 verkleinert wird, vorzugsweise wird das Lüftspiel eliminiert, d.h. Reibbremsbeläge der Radbremsen 5 legen sich an Bremsscheiben, Bremstrommeln oder sonstige Bremskörper der Radbremsen 5 an. Die Reibbremsbeläge können nahezu kraftfrei oder auch bereits mit einer geringen Spannkraft an die Bremskörper angedrückt werden, wobei eine geringe Spannkraft eine leichte Bremsbetätigung bedeutet. Als möglicher Bremswunsch wird beispielsweise eine Rücknahme eines Gaspedals in eine Leerlaufstellung angesehen, die mit dem Gaspedalsensor 19 gemessen wird. Kriterium eines möglichen Bremswunsches kann auch die Geschwindigkeit der Rücknahme des Gaspedals sein, insbesondere eine ungewöhnlich schnelle Rücknahme des Gaspedals. Ebenfalls kann als möglicher Bremswunsch die Annäherung des Fuß 21 des Fahrzeugführers an das Bremspedal 15, die mit dem Fußsensor 20 feststellbar ist, oder die Annäherung des Fahrzeugs an ein vorausfahrendes Fahrzeugs oder an ein Hindernis, die mit dem Abstandssensor 22 gemessen wird, angesehen werden. Die Aufzählung der Umstände, die als möglicher Bremswunsch angesehen werden, ist nicht abschließend. Durch die Verkleinerung oder vorzugsweise Elimination des Lüftspiels der Radbremsen 5 bereits auf den möglichen Bremswunsch hin erfolgt eine anschließende, tatsächliche Bremsbetätigung schneller, weil kein Leerweg des Bremspedals 15 zur Überwindung des Lüftspiels der Radbremsen 5 notwendig ist.

Eine Ausgestaltung des erfindungsgemäßen Verfahrens sieht vor, dass auf den möglichen Bremswunsch hin nicht nur der Bremskraftverstärker 13 betätigt, sondern auch entweder die Trennventile 4 oder die Bremsdruckaufbauventile 7 geschlossen werden. Weil die Trennventile 4 mit den ihnen parallel geschalteten Rückschlagventilen 6 einen in Richtung der Radbremsen 5 durchströmbaren Bypass aufweisen, können die Trennventile 4, vor, zeitgleich oder auch nach Betätigung des Bremskraftverstärkers 13 geschlossen werden. Die Bremsdruckaufbauventile 7 werden erst nach Betätigung des Bremskraftverstärkers 13, also nach Verkleinerung oder Elimination des Lüftspiels der Radbremsen 5, geschlossen, weil die ihnen parallel geschalteten Rückschlagventile 8 nicht in Richtung der Radbremsen 5 durchströmbar sind. Durch das Schließen der Trennventile 4 oder der Bremsdruckaufbauventile 7 wird das durch Betätigung des Bremskraftverstärkers 13 auf den möglichen Bremswunsch hin vom Hauptbremszylinder 3 in die Radbremsen 5 verdrängte Bremsflüssigkeitsvolumen in den Radbremsen 5 bzw. der Fahrzeugbremsanlage 1 eingeschlossen. Der Bremskraftverstärker 13 wird wieder in seine Ausgangsstellung rückgestellt. Durch das in den Radbremsen 5 oder der Fahrzeugbremsanlage 1 eingeschlossene Bremsflüssigkeitsvolumen bleibt das Lüftspiel der Radbremsen 5 verkleinert oder eliminiert. Die Trennventile 4 oder die Bremsdruckaufbauventile 7 werden wieder geöffnet, wenn nach Betätigung des Bremskraftverstärkers 13 auf den möglichen Bremswunsch hin tatsächlich eine Bremsung durch Betätigung des Bremspedals 15 erfolgt. Die Trennventile 4 oder die Bremsdruckaufbauventile 7 können gleich bei Betätigung des Bremspedals 15 geöffnet werden oder auch erst dann, wenn der Druck im Hauptbremszylinder 3 den Druck in der Fahrzeugbremsanlage 1 oder in den Radbremsen 5 näherungsweise erreicht hat. Die Trennventile 4 oder die Bremsdruckaufbauventile 7 werden auch dann wieder geöffnet, wenn der mögliche Bremswunsch nicht mehr besteht, also beispielsweise wenn nach Lösen des Gaspedals eine gewisse Zeitspanne vergangen ist oder das Gaspedal wieder betätigt wird oder wenn der Fuß 21 des Fahrzeugführers vom Bremspedal 15 entfernt wird.

Das erfindungsgemäße Verfahren ist auch unabhängig von einem möglichen Bremswunsch anwendbar zu einer Lüftspieleinstellung oder einer Bremspedalwegeinstellung. Es kann beispielsweise ein konstruktiv bedingtes Lüftspiel der Radbremsen 5 durch Betätigung des Bremskraftverstärkers 13 verkleinert werden. Zu diesem Zweck kann beispielsweise mit dem Wegsensor 18 die Bewegung des Bremspedals 15 bei einer Bremsbetätigung von der Ausgangsstellung des Bremspedals 15 bis zu einem messbaren Druckanstieg des hydraulischen Drucks in der Fahrzeugbremsanlage 1 gemessen werden. Der Druckanstieg zeigt das Anliegen der Reibbremsbeläge der Radbremsen 5 an deren Bremskörpern an. Durch Betätigung des Bremskraftverstärkers 13, also eine Verstellung seiner Ausgangsstellung, kann dieser Weg verkürzt und damit das Lüftspiel der Radbremsen 5 verkleinert werden. Vorzugsweise bei Fahrzeugstillstand ist auch eine radindividuelle Messung des Leerwegs bis zum Anlegen der Reibbremsbeläge der Radbremsen 5 an deren Bremskörpern möglich. Eine radindividuelle Lüftspieleinstellung ist in diesem Fall durch Betätigung des Bremskraftverstärkers 13 radindividuell möglich, indem alle Bremsdruckaufbauventile 7 bis auf eines geschlossen und das offen gebliebene Bremsdruckaufbauventil 7 nach der Lüftspieleinstellung ebenfalls geschlossen wird. Das Verfahren wird nacheinander für jede Radbremse 5 durchgeführt.

## Patentansprüche

1. Verfahren zur Steuerung einer hydraulischen, einen steuerbaren Bremskraftverstärker (3) aufweisenden Fahrzeugbremsanlage (1) zur Verkleinerung des Lüftspiels einer Radbremse(5), wobei die Fahrzeugbremsanlage (1) ein Ventil (4; 7), mit dem die Radbremse (5) hydraulisch von einem Hauptbremszylinder (3) der Fahrzeugbremsanlage (1) trennbar ist, und eine Hydropumpe (10), an die die Radbremse (5) druckseitig angeschlossen ist aufweist, wobei auf einen möglichen Fahrzeugführer-Bremswunsch hin oder auf einen möglichen Bremswunsch hin, der auf einen Abstand zu einem vorausfahrenden Fahrzeug oder zu einem Hindernis, oder auch auf die Änderung des Abstands als Kriterium zurückgeht der Bremskraftverstärker (3) betätigt und das Ventil (4,7) geschlossen wird, derart, dass ein Lüftspiel in der Radbremse (5) zumindest verkleinert wird, und wobei nach dem Schließen des Ventils (4,7) der Bremskraftverstärker (13) in seine Ausgangsstellung rückgestellt wird, wobei die Hydropumpe (10) nicht benutzt wird um das Lüftspiel der Radbremsen zur Vorbereitung einer Bremsbetätigung zu verkleinern.

2. Verfahren nach Anspruch 1, **dadurch gekennzeichnet, dass** bei einer Bremsbetätigung das Ventil (4; 7) geöffnet wird.

3. Verfahren nach Anspruch 1, **dadurch gekennzeichnet, dass** ein Lösen und/oder ein schnelles Lösen eines Gaspedals oder eines Gasgriffs als möglicher Fahrzeugführer-Bremswunsch angesehen wird.

4. Verfahren nach Anspruch 1, **dadurch gekennzeichnet, dass** mit einer Sensorik (20) eine Annäherung eines Fuß (21) eines Fahrzeugführers an ein Bremspedal (15) erkannt und als möglicher Fahrzeugführer-Bremswunsch angesehen wird.

5. Verfahren nach Anspruch 1, **dadurch gekennzeichnet, dass** das Verfahren zu einer Lüftspieleinstellung und einer Bremspedalwegeinstellung angewandt wird.

6. Verfahren nach Anspruch 1, **dadurch gekennzeichnet, dass** die Fahrzeugbremsanlage (1) einen elektromechanischen Bremskraftverstärker (13) aufweist.

## Claims

1. Method for controlling a hydraulic vehicle brake system (1) having a controllable brake booster (3) to reduce the release clearance of a wheel brake (5), the vehicle brake system (1) having a valve (4; 7), by means of which the wheel brake (5) can be isolated hydraulically from a master brake cylinder (3) of the vehicle brake system (1), and a hydraulic pump (10) to which the wheel brake (5) is connected on the pressure side, the brake booster (3) being actuated in response to a possible desire for braking on the part of a driver or to a possible desire for braking attributed to a clearance with respect to a vehicle in front or with respect to an obstacle, or else to the change in the clearance as the criterion, and the valve (4, 7) being closed in such a way that a release clearance in the wheel brake (5) is at least reduced, and the brake booster (13) being then reset to its initial position ofter the closure of the valve (4, 7), the hydraulic pump (10) not being used to reduce the release clearance of the wheel brakes in order to prepare a brake actuation.

2. Method according to Claim 1, **characterized in that** the valve (4; 7) is opened upon brake actuation.

3. Method according to Claim 1, **characterized in that** release and/or rapid release of a gas pedal or of a gas throttle grip is regarded as a possible desire for braking on the part of a driver.

4. Method according to Claim 1, **characterized in that** the approach of a foot (21) of a driver to a brake pedal (15) is detected by a sensor system (20) and regarded as a possible desire for braking on the part of a driver.

5. Method according to Claim 1, **characterized in that** the method is used for setting a release clearance and a brake pedal travel.

6. Method according to Claim 1, **characterized in that** the vehicle brake system (1) has an electromechanical brake booster (13).

## Revendications

1. Procédé de commande d'une installation de freinage hydraulique de véhicule (1) présentant un servofrein commandable (3), pour réduire le jeu d'un frein de roue (5), l'installation de freinage de véhicule (1) présentant une soupape (4 ; 7) avec laquelle le frein de roue (5) peut être séparé hydraulique d'un cylindre de freinage principale (3) de l'installation de freinage de véhicule (1), et une pompe hydraulique (10) à laquelle se raccorde le frein de roue (5) du côté pression, le servofrein, (3), en réponse à un souhait de freinage éventuel du conducteur du véhicule, ou en réponse à un souhait de freinage éventuel qui est émis en fonction d'une distance à un véhicule situé en avant ou à un obstacle ou également à la variation de la distance en tant que critère, étant actionné et la soupape (4, 7) étant fermée, de telle sorte qu'un jeu dans le frein de roue (5) soit au moins réduit, et après la fermeture de la soupape (4, 7), le servofrein (13) étant ramené dans sa position de départ, la pompe hydraulique (10) n'étant pas utilisée pour réduire le jeu des freins de roue pour préparer un actionnement des freins.

2. Procédé selon la revendication 1, **caractérisé en ce que** la soupape (4 ; 7) est ouverte lors d'un actionnement des freins.

3. Procédé selon la revendication 1, **caractérisé en ce qu'**un relâchement et/ou un relâchement rapide d'une pédale d'accélération ou d'un accélérateur est considéré comme un souhait de freinage éventuel du conducteur du véhicule.

4. Procédé selon la revendication 1, **caractérisé en ce qu'**un rapprochement d'un pied (21) d'un conducteur du véhicule d'une pédale de frein (15) est détecté au moyen d'un système de capteurs (20) et est considéré comme un souhait de freinage éventuel du conducteur du véhicule.

5. Procédé selon la revendication 1, **caractérisé en ce que** le procédé est utilisé pour ajuster un jeu et une course de la pédale de frein.

6. Procédé selon la revendication 1, **caractérisé en ce que** l'installation de freinage de véhicule (1) présente un servofrein électromécanique (13).
